# EUROPÄISCHE PATENTSCHRIFT

(11) **EP 1 199 194 B1**
(45) Veröffentlichungstag und Bekanntmachung des Hinweises auf die Patenterteilung: **22.03.2006**
(21) Anmeldenummer: 01122073.8
(22) Anmeldetag: 14.09.2001
(51) Int. Cl.: B60D 1/46, B60D 1/14

(54) **Vorrichtung zum Kuppeln eines Fahrzeugs mit einem Gerät oder Anhänger**
Device for coupling a vehicle to an implement or a trailer
Dispositif pour accoupler un véhicule à un outil ou à une remorque

(30) Priorität: 20.10.2000 DE 10052051
(43) Veröffentlichungstag der Anmeldung: 24.04.2002
(73) Patentinhaber: DEERE & COMPANY, Moline, Illinois 61265-8098 (US)
(72) Erfinder: Bernhardt, Gerd, Prof. Dr.-Ing. habil., 01728 Hänichen (DE); Fedotov, Sergiy, 01069 Dresden (DE); Rudik, Ruslan, 01217 Dresden (DE); Weiss, Heinz, 64625 Bensheim (DE)
(74) Vertreter: Lau-Loskill, Philipp

(56) Entgegenhaltungen:
- EP-A- 1 095 549
- FR-A- 2 641 234
- GB-A- 1 088 258
- US-A- 3 716 253
- US-A- 4 340 240

## Beschreibung

Die Erfindung betrifft eine Vorrichtung zum Kuppeln eines Fahrzeugs, insbesondere eines landwirtschaftlichen oder industriellen Fahrzeugs mit einem Gerät, Anhänger oder dergleichen, welche einen als Geräteschnittstelle dienenden Dreipunktanbau mit einem fahrzeugseitigen, relativ zum Fahrzeugrumpf bewegbaren Kopplungsrahmen enthält, wobei an dem Kopplungsrahmen eine Einpunktkupplung befestigt ist.

Eine Kuppelvorrichtung ist beispielsweise aus dem Internationalen Standard ISO 11001-2 oder aus der DE-AS-1 215 419 bekannt.

Heutzutage werden Einpunktkupplungen an einem landwirtschaftlichen Fahrzeug, beispielsweise die Anhängerkupplung eines Traktors, starr oder stufenweise verstellbar am Fahrzeugrumpf befestigt (DE-A-31 22 116, DE-A-35 06 466, EP-A-0 667 252). Dies hat den Nachteil, dass die Höhe der Einpunktkupplung nicht immer exakt an den Anhänger oder das gezogene Gerät angepasst ist, was zusätzlichen Arbeits- und Zeitaufwand bei dem Ankoppelvorgang und eventuell eine Zweimannbedienung erfordert. Des Weiteren ist die Verstellung der Kupplungshöhe wegen der relativ hohen Gewichte der Kupplungsvorrichtung mühsam und erfordert im Allgemeinen eine große Kraftanstrengung.

Aus der FR-A-2 641 234 geht eine Kuppelvorrichtung für einen Traktor hervor, bei der ein Rahmen über längenverstellbare Verbindungselemente mit dem Traktorrumpf verbunden ist. An dem Rahmen ist ein Haken zur Befestigung von Anhängegeräten befestigt. Ein als Geräteschnittstelle dienender Dreipunktanbau ist nicht vorgesehen.

Die GB-A-1,088,258, die US-A-3,716,253 und die US-A-4,340,240 beschreiben je eine gattungsgemäße Kupplungsvorrichtung mit einer 3-Punkt-Anbauvorrichtung, bei der an den Enden zweier Unterlenker und eines Oberlenkers ein Rahmen befestigt ist, welcher drei Anlenkstellen für einen Dreipunktanbau trägt. An dem Rahmen ist jeweils ein Kupplungsmaul, eine Deichselkupplung bzw. eine Kugelkupplung befestigt. Diese Anordnung ermöglicht lediglich einen relativ begrenzten Bewegungsspielraum für das Kupplungsorgan.

Es ist wünschenswert, eine innerhalb weiter Grenzen stufenlos höhenverstellbare Einpunktkupplung bereitzustellen, die eine bequeme Höhenverstellung und Ankopplung des Anhängers oder Geräts ermöglicht und die möglichst von einer Bedienungsperson, nach Möglichkeit vom Führerstand aus, bedient werden kann.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die Erfindung bezieht sich damit auf eine besondere Befestigung der Einpunktkupplung im Kopplungsrahmen eines Dreipunktanbaus, insbesondere eines Hexapodanbaus. Sie sieht insbesondere vor, dass der Kopplungsrahmen über wenigstens sechs längenverstellbare Verbindungselemente mit dem Fahrzeugrumpf verbunden ist, die in geschlossenen kinematischen Ketten angeordnet sind und die Bewegung des Kopplungsrahmens in sechs Freiheitsgraden ermöglichen.

Die erfindungsgemäße Vorrichtung dient dem Ankoppeln gezogener Anhänger, Geräten oder dergleichen an ein Fahrzeug, insbesondere an ein landwirtschaftliches oder industrielles Fahrzeug. Die Vorrichtung enthält einen als Geräteschnittstelle dienenden, in seiner relativen Lage zum Fahrzeug verstellbaren Dreipunktanbau mit einem Kopplungsrahmen, an dem eine Einpunktkupplung befestigt ist.

Unter einem Dreipunktanbau wird jede relativ zum Fahrzeug verstellbare Befestigungsvorrichtung verstanden, die eine Montagefläche bildet, über die sich ein Anbaugerät an dem Fahrzeug befestigen und in seiner Lage verstellen lässt. Die Befestigungsvorrichtung muss nicht notwendigerweise singuläre, auf einer Ebene liegende Anlenkpunkte aufweisen und die Anlenkpunkte müssen nicht notwendiger Weise dreieckförmig angeordnet sein.

Gemäß der Erfindung ist die Einpunktkupplung in den Kopplungsrahmen der Geräteschnittstelle des Dreipunktanbaus integriert und lässt sich mit diesem stufenlos bezüglich der Höhe und gegebenenfalls auch in seitlicher Richtung und in Fahrzeuglängsrichtung verstellen. Dies ermöglicht eine bequeme Einstellung auf unterschiedliche Deichselhöhen von Anhängern bzw. auf unterschiedliche räumliche Lagen der Koppelelemente von Anbaugeräten. Das Ankoppeln eines Anhängers oder Geräts kann je nach Ausführung durch ein- bis dreidimensionale Bewegungen des Kopplungsrahmens erfolgen, ohne dass das Fahrzeug oder das Gerät bewegt wird. Das Ankoppeln kann von nur einer Person, gegebenenfalls auch von der Bedienungsplattform aus, vorgenommen werden.

Vorzugsweise bildet der Kopplungsrahmen ein Dreieck mit zwei unteren und einer oberen Ecke, wobei im Bereich der Ecken mit dem Fahrzeugrumpf verbundene Verbindungselemente angelenkt sind, die längenverstellbar sind. Der Kopplungsrahmen kann als Dreieckrahmen mit drei Schenkeln ausgebildet sein. Er kann jedoch in zweckmäßiger Weise auch zwei Schenkel aufweisen, die nach Art eines auf dem Kopf stehenden V, oben miteinander verbunden sind und nach unten schräg auseinanderlaufen, so dass der Rahmen unten offen ist und einen ausreichenden Freiraum für eine Zapfwelle bereithält. Anstelle der V-Form kann auch eine U-Form verwendet werden. Eine derartige Ausbildung liegt der in dem internationalen Standard ISO 11001-2 angegebenen sogenannten A-Rahmen-Kupplung zu Grunde. Der Kopplungsrahmen der A-Rahmen-Kupplung ist über zwei Unterlenker und einen Oberlenker, in den ein der Längenverstellung dienender Hydraulikzylinder integriert ist, gelenkig mit dem Fahrzeugrumpf verbunden. Gegebenenfalls können auch in die Unterlenker Hydraulikzylinder zur Längenverstellung integriert sein.

Eine zweckmäßige, auf einfache kostengünstige Weise ausführbare Befestigung der Einpunktkupplung an dem Kopplungsrahmen ergibt sich dadurch, dass an zwei Schenkeln des Kopplungsrahmens je ein Träger befestigt ist, dass die Träger aufeinander zu laufen und dass in ihrem Schnittpunkt die Einpunktkupplung befestigt ist.

Die Einpunktkupplung liegt vorzugsweise nicht in der Koppelebene des Dreipunktanbaus, sondern ist bezüglich der Ebene des Kopplungsrahmens zum Fahrzeugrumpf hin versetzt. Des Weiteren ist die Einpunktkupplung hinsichtlich der Eckpunkte eines dreieckförmigen Kopplungsrahmens zweckmäßiger Weise in einem mittleren Bereich des Dreiecks angeordnet. Diese Ausbildungen liefern einen Freiraum, der eine ungehinderte Anwendung des Dreipunktanbaus ermöglicht.

Eine bevorzugte Ausgestaltung ist darin zu sehen, dass die Verbindungselemente nach Art eines Hexapods angeordnet sind. Eine hierfür geeignete Anbauschnittstelle ist durch die nachveröffentlichte DE-A-199 51 840 beschrieben.

Als längenverstellbare Verbindungselemente eignen sich vielfältige, beispielsweise hydraulische oder elektrisch angetriebene Bauelemente. Besonders geeignet sind Hydraulikzylinder, die bei relativ großen Kräften relativ große Hübe in kurzer Zeit ausführen können. Die Hydraulikzylinder können mit ihrer hydraulischen Beschaltung (Ventile, Drosselstellen etc.) derart ausgelegt werden, dass sie in besonders vorteilhafter Weise als Stoßdämpfer für die Einpunktkupplung dienen und beispielsweise die von einer Deichsel übertragenen Schwingungen dämpfen.

Vorzugsweise sind an dem Kopplungsrahmen Fanghaken angeordnet, die der Dreipunkt-Befestigung eines Anbaugerätes dienen. Beispielsweise können drei Fanghaken verwendet werden, die an den Eckpunkten eines dreickförmigen Kopplungsrahmens befestigt sind. Es ist jedoch auch möglich den Kopplungsrahmen im Sinne einer Schnellkupplung auszulegen, der sich nach Art einer aus zwei dreieckigen Rahmen bestehenden Kupplungseinrichtung, wie beispielsweise in der DE-AS 1 215 419 beschrieben, leicht mit einem entsprechenden Dreieckrahmen des Anbaugeräts koppeln lässt.

Die Einpunktkupplung ist vorzugsweise eine Abschleppeinrichtung, insbesondere ein Zugmaul. Diese kann entsprechend der Norm 79/533/EWG oder DIN 74 956 ausgebildet sein. Als Einpunktkupplung kommt auch eine Kugelkupplung oder eine andere Kupplungsart in Betracht.

Es ist des Weiteren von Vorteil, die Einpunktkupplung als eine automatische Anhängerkupplung auszubilden, die dann, wenn eine Anhängeöse eines Anhängers in die Einpunktkupplung eingeschoben wird, selbsttätig einen Sicherungsbolzen durch die Anhängeöse bewegt und so eine automatische Kopplung vornimmt. Ein Beispiel für eine selbsttätige Anhängekupplung geht aus der DE-AS-1 095 132 hervor.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: den Heckbereich eines Traktors mit einer erfindungsgemäßen Kupplungsvorrichtung,
- Fig. 2: eine erfindungsgemäße Kupplungsvorrichtung, durch die ein Anhänger an einem Traktor gekuppelt ist,
- Fig. 3 und 4: die Seitenansicht einer erfindungsgemäßen Kupplungsvorrichtung in zwei unterschiedlichen Anhängehöhen.

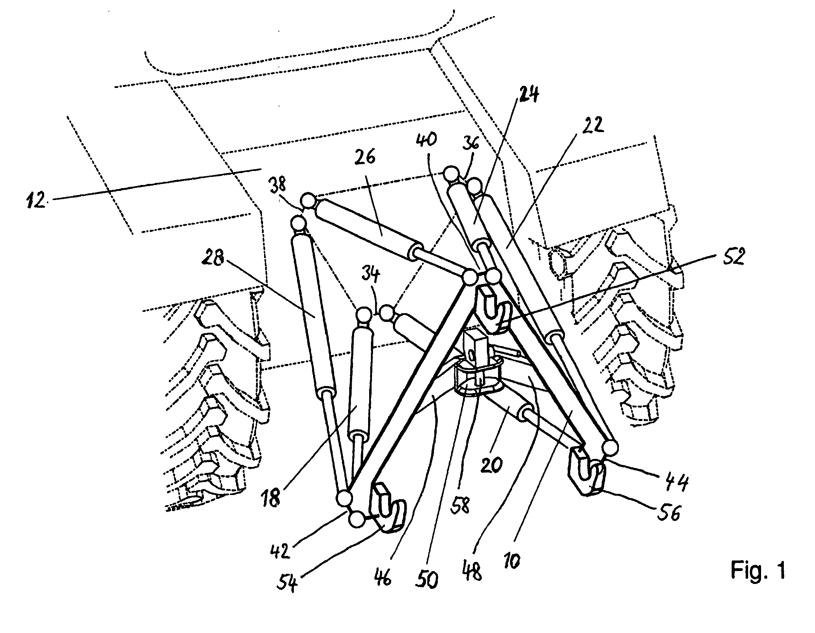

Die Anbauschnittstelle des in Fig. 1 dargestellten Ausführungsbeispiels enthält im Wesentlichen einen dreieckförmigen Kopplungsrahmen 10 und sechs längenverstellbare Verbindungselemente 18, 20, 22, 24, 26, 28, deren jeweils erste Enden gelenkig am Fahrzeugrumpf 12, z. B. am Differentialgehäuse oder am Fahrzeugrahmen, und deren jeweils zweite Enden gelenkig am Kopplungsrahmen 10 befestigt sind.

Die fahrzeugseitigen Anlenkstellen der Verbindungselemente 18, 20, 22, 24, 26, 28 liegen im Wesentlichen in den Eckpunkten 34, 36, 38 eines fahrzeugseitigen Dreiecks. Einer dieser Eckpunkte 34 liegt tief und bezüglich der Fahrzeugquerrichtung in der Mitte. Die beiden weiteren Eckpunkte 36, 38 des fahrzeugseitigen Dreiecks liegen miteinander auf gleicher Höhe oberhalb des tiefen Eckpunkts 34 und sind symmetrisch zur Fahrzeugquerrichtung angeordnet. Die rahmenseitigen Anlenkstellen der Verbindungselemente 18, 20, 22, 24, 26, 28 liegen im Wesentlichen in den Eckpunkten 40, 42, 44 eines rahmenseitigen Dreiecks. Einer dieser Eckpunkte 40 liegt hoch, während die beiden weiteren Eckpunkte 42, 44 des rahmenseitigen Dreiecks miteinander auf gleicher Höhe liegen und unterhalb des hohen Eckpunkts 40 angeordnet sind.

Die längenverstellbaren Verbindungselemente 18, 20, 22, 24, 26, 28 sind auf bekannte Weise nach Art eines Hexapods angeordnet. Sie bestehen im Wesentlichen jeweils aus doppelseitig wirkenden Hydraulikzylinder. Es können jedoch grundsätzlich auch elektromechanische Verstellelemente geeignet sein.

Der Kopplungsrahmen 10 enthält im Wesentlichen zwei Schenkel, die oben miteinander verbunden sind und nach unten schräg auseinanderlaufen. Der Kopplungsrahmen 10 trägt in seinen Eckpunkten 40, 42, 44 auf der dem Fahrzeug abgewandten Seite je einen nach oben offenen Haken 52, 54, 56, die der starren Dreipunkt-Befestigung von Arbeitsgeräten dienen.

Im mittleren Bereich jedes Schenkels des Kopplungsrahmens 10 ist ein Träger 46, 48 befestigt. Die Träger 46, 48 laufen aufeinander zu. In ihrem Schnittpunkt ist eine Einpunktkupplung 50 befestigt, die im dargestellten Ausführungsbeispiel als Abschleppeinrichtung nach Art eines Zugmauls ausgebildet ist. Es handelt sich um eine automatische Anhängekupplung, bei der sich der Bolzen 58 selbsttätig in eine Anhängeöse bewegt, sobald diese in das Zugmaul eingefahren wird.

Die Träger 46, 48 liegen nicht in der durch den Kopplungsrahmen 10 aufgespannten Koppelebene sondern verlaufen ausgehend vom Kopplungsrahmen 10 schräg in Richtung Fahrzeugrumpf 12, so dass die Einpunktkupplung 50 hinsichtlich der Koppelebene versetzt ist und auf der Seite des Fahrzeugrumpfs 12 liegt. Die Einpunktkupplung 50 liegt in etwa in der Mitte zwischen den Eckenpunkten 42, 44, 46 des Kopplungsrahmens 10. Durch diese Anordnung beanspruchen die mechanischen Fanghaken 52, 54, 56 der Dreipunkt-Kupplung andere Räume als das Zugmaul der Einpunkt-Kupplung 50, so dass diese sich nicht gegenseitig behindern.

In Fig. 1 sind die sechs Hydraulikzylinder 18, 20, 22, 24, 26, 28 im teilweise ausgefahrenen Zustand gezeigt, so dass die volle Beweglichkeit der Dreipunkt-Kupplung und mit ihr auch der Einpunkt-Kupplung gegeben ist.

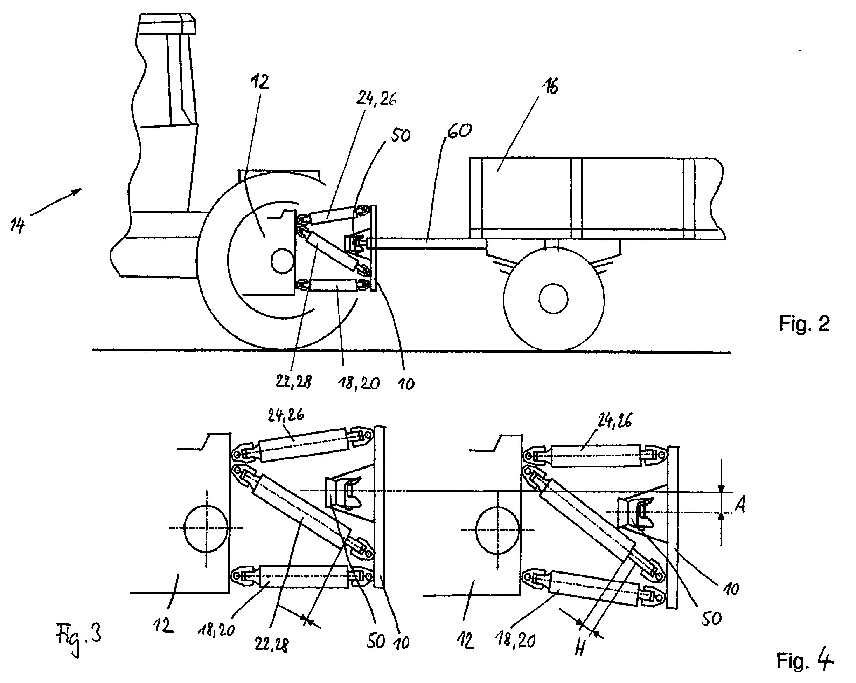

Aus Fig. 2 geht der hintere Teil eines Traktors 14 mit einer Kuppelvorrichtung gemäß Fig. 1 und der vordere Teil eines Anhängers 16 hervor. Die Anhängeöse am vorderen Ende der Deichsel 60 des Anhängers 16 befindet sich im Zugmaul 50 der Kuppelvorrichtung und ist durch einen Sicherungsbolzen 58 befestigt. Es handelt sich um die Transportstellung.

Durch Betätigung der Verbindungselemente 18, 20, 22, 24, 26, 28 lässt sich deren Länge verstellen. Damit kann der Kopplungsrahmen 10 innerhalb weiter Grenzen stufenlos in sechs Freiheitsgraden bewegt werden. Dies ermöglicht das Auffinden des zu kuppelnden Elements, beispielsweise einer Anhängeöse, beim Einkuppelvorgang und stehendem Fahrzeug. Hierbei werden die Verbindungselemente 18, 20, 22, 24, 26, 28 und damit der Kopplungsrahmen 10 in geeigneter Weise ausgefahren bis die Anhängeöse von dem Zugmaul 50 aufgenommen wird, wobei sich durch Druck die Einpunktkupplung verriegelt. Dann werden die Verbindungselemente 18, 20, 22, 24, 26, 28 voll eingefahren, so dass sich die in Fig. 2 gezeigte starre Anlenkung ergibt.

Durch Einfahren und Ausfahren der Verbindungselemente 18, 20, 22, 24, 26, 28 lässt sich die Arbeitsposition des zu kuppelnden Elements in weiten Grenzen beliebigen einstellen. Wie aus den Figuren 3 und 4 hervorgeht, lässt sich beispielsweise durch Ein- und Ausfahren der Hydraulikzylinder 22 und 28 die Einpunktkupplung 50 stufenlos auf unterschiedliche Deichselhöhen des Anhängers 16 einstellen. Gemäß Fig. 3 und 4 sind die Hydraulikzylinder 18, 20, 24 und 26 voll eingefahren, während die Hydraulikzylinder 22 und 28 teilweise ausgefahren sind. Der Hub H der Zylinder 22 und 28 ist in Fig. 4 größer als in Fig. 3, so dass die Anhängehöhe gemäß Fig. 4 um den Betrag A tiefer liegt als in Fig. 3.

Die Steuerung und Einstellung der Verbindungselemente 18, 20, 22, 24, 26, 28 kann durch Bedienung geeigneter, nicht näher dargestellter Steuerelemente von der Fahrerkabine aus vorgenommen werden.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. So kann beispielsweise an Stelle der Hexapod-Anordnung der Kopplungsrahmen über zwei Unterlenker und einen längenverstellbaren Oberlenker mit dem Fahrzeugrumpf verbunden sein. Des Weiteren kann an Stelle der Fanghaken ein Kopplungsrahmen vorgesehen sein, der im Sinne einer Schnellkupplung ausgelegt ist und in den sich ein geräteseitiger Rahmen einhängen lässt.

## Patentansprüche

1. Vorrichtung zum Kuppeln eines Fahrzeugs, insbesondere eines landwirtschaftlichen oder industriellen Fahrzeugs (14), mit einem Gerät, Anhänger (16) oder dergleichen, welche einen als Geräteschnittstelle dienenden Dreipunktanbau mit einem fahrzeugseitigen, relativ zum Fahrzeugrumpf bewegbaren Kopplungsrahmen (10) enthält, wobei an dem Kopplungsrahmen (10) eine Einpunktkupplung (50) befestigt ist, **dadurch gekennzeichnet, dass** der Kopplungsrahmen (10) über wenigstens sechs längenverstellbare Verbindungselemente (18, 20, 22, 24, 26, 28) mit dem Fahrzeugrumpf (12) verbunden ist, die in geschlossenen kinematischen Ketten angeordnet sind und die Bewegung des Kopplungsrahmens (10) in sechs Freiheitsgraden ermöglichen.

2. Vorrichtung nach Anspruch 1, **dadurch gekennzeichnet, dass** der Kopplungsrahmen (10) im Wesentlichen ein Dreieck mit zwei unteren Ecken (42, 44) und einer oberen Ecke (40) bildet, wobei im Bereich der Ecken (40, 42, 44) mit dem Fahrzeugrumpf (12) verbundene Verbindungselemente (18, 20, 22, 24, 26, 28) angelenkt sind.

3. Vorrichtung nach Anspruch 1 oder 2, **dadurch gekennzeichnet, dass** der Kopplungsrahmen (10) im Wesentlichen nach Art einer auf dem Kopf stehenden V-Form oder U-Form ausgebildet ist.

4. Vorrichtung nach einem der Ansprüche 1 bis 3, **dadurch gekennzeichnet, dass** an zwei Schenkeln des Kopplungsrahmens (10) je ein Träger (46, 48) befestigt ist, dass die Träger (46, 48) aufeinander zu laufen und dass in ihrem Schnittpunkt die Einpunktkupplung (50) befestigt ist.

5. Vorrichtung nach einem der Ansprüche 1 bis 4, **dadurch gekennzeichnet, dass** die Einpunktkupplung (50) in einem Bereich zwischen Kopplungsrahmen (10) und Fahrzeugrumpf (12) liegt.

6. Vorrichtung nach einem der Ansprüche 1 bis 5, **dadurch gekennzeichnet, dass** die Einpunktkupplung (50) hinsichtlich der Eckpunkte (40, 42, 44) eines dreieckförmigen Kopplungsrahmens (10) in einem mittleren Bereich des Dreiecks angeordnet ist.

7. Vorrichtung nach einem der Ansprüche 1 bis 6, **dadurch gekennzeichnet, dass** die Verbindungselemente (18, 20, 22, 24, 26, 28) nach Art eines Hexapod angeordnet sind.

8. Vorrichtung nach einem der Ansprüche 1 bis 7, **dadurch gekennzeichnet, dass** wenigstens ein Verbindungselement (18, 20, 22, 24, 26, 28) einen Hydraulikzylinder zur Längenverstellung enthält.

9. Vorrichtung nach einem der Ansprüche 1 bis 8, **dadurch gekennzeichnet, dass** an dem Kopplungsrahmen (10) Fanghaken (52, 54, 56) angeordnet sind, die der Dreipunkt-Befestigung eines Anbaugerätes dienen.

10. Vorrichtung nach einem der Ansprüche 1 bis 9, **dadurch gekennzeichnet, dass** die Einpunktkupplung (50) eine Abschleppeinrichtung, insbesondere ein Zugmaul oder eine Kugelkupplung, enthält.

11. Vorrichtung nach einem der Ansprüche 1 bis 10, **dadurch gekennzeichnet, dass** die Einpunktkupplung (50) eine automatische Anhängerkupplung ist.

## Claims

1. Apparatus for coupling a vehicle, especially an agricultural or industrial vehicle (14) to an implement, trailer (16) or the like, which includes a three point structure serving as an implement interface, with a coupling frame (10) on the vehicle side, movable relative to the vehicle body, wherein a single point coupling (50) is fixed on the coupling frame (10), **characterized in that** the coupling frame (10) is coupled to the vehicle body (12) by at least six connecting elements of variable length (18, 20, 22, 24, 26, 28), which are arranged in closed kinematic chains and allow movement of the coupling frame (10) in six degrees of freedom.

2. Apparatus according to claim 1, **characterized in that** the coupling frame (10) is essentially in the form of a triangle with two lower corners (42, 44) and an upper corner (40), wherein connecting elements (18, 20, 22, 24, 26, 28) connected to the vehicle body (12) are articulated in the region of the corners (40, 42, 44).

3. Apparatus according to claim 1 or 2, **characterized in that** the coupling frame (10) is essentially in the form of an inverted V shape or U shape.

4. Apparatus according to any of claims 1 to 3, **characterized in that** carriers (46, 48) are fixed to each of two limbs of the coupling frame (10), **in that** the carriers (46, 48) run together and **in that** the single point coupling (50) is fixed at their intersection.

5. Apparatus according to any of claims 1 to 4, **characterized in that** the single point coupling (50) lies in a region between the coupling frame (10) and vehicle body (12).

6. Apparatus according to any of claims 1 to 5, **characterized in that** the single point coupling (50) is arranged in a middle region of the triangle relative to the corner points (40, 24, 44) of a triangular coupling frame (10).

7. Apparatus according to any of claims 1 to 6, **characterized in that** the connecting elements (18, 20, 22, 24, 26, 28) are arranged in the manner of a hexapod.

8. Apparatus according to any of claims 1 to 7, **characterized in that** at least one connecting element (18, 20, 22, 24, 26, 28) includes a hydraulic cylinder for the length adjustment.

9. Apparatus according to any of claims 1 to 8, **characterized in that** catch hooks (52, 54, 56) are arranged on the coupling frame (10), serving for the three point attachment of a mounted implement.

10. Apparatus according to any of claims 1 to 9, **characterized in that** the single point coupling (50) includes a towing device, especially a towing jaw or a ball coupling.

11. Apparatus according to any of claims 1 to 10, **characterized in that** the single point coupling (50) is an automatic trailer coupling.

## Revendications

1. Dispositif pour accoupler un véhicule, en particulier un véhicule agricole ou industriel (14), avec une machine, une remorque (16) ou autre élément similaire, lequel comporte un système d'attelage trois points, faisant fonction d'interface de la machine et muni, du côté véhicule, d'un châssis d'attelage (10) mobile par rapport au corps du véhicule, un attelage à un point (50) étant fixé sur le châssis d'attelage (10), **caractérisé en ce que** le châssis d'attelage (10) est relié au corps du véhicule (12) par l'intermédiaire d'au moins six éléments d'assemblage (18, 20, 22, 24, 26, 28), qui sont réglables en longueur et qui sont agencés en chaînes cinématiques fermées et permettent le mouvement du châssis d'attelage (10) dans six degrés de liberté.

2. Dispositif selon la revendication 1, **caractérisé en ce que** le châssis d'attelage (10) est formé sensiblement en triangle avec deux angles inférieurs (42, 44) et un angle supérieur (40), des éléments d'assemblage (18, 20, 22, 24, 26, 28), reliés au corps du véhicule (12), étant articulés dans la zone des angles (40, 42, 44).

3. Dispositif selon la revendication 1 ou 2, **caractérisé en ce que** le châssis d'attelage (10) est réalisé sensiblement en forme de V ou de U renversé.

4. Dispositif selon l'une quelconque des revendications 1 à 3, **caractérisé en ce que** sur chacune des deux branches du châssis d'attelage (10) est fixé un support (46, 48), **en ce que** les supports (46, 48) convergent l'un vers l'autre et **en ce que** l'attelage à un point (50) est fixé dans leur point d'intersection.

5. Dispositif selon l'une quelconque des revendications 1 à 4, **caractérisé en ce que** l'attelage à un point (50) est situé dans une zone entre le châssis d'attelage (10) et le corps du véhicule (12).

6. Dispositif selon l'une quelconque des revendications 1 à 5, **caractérisé en ce que** l'attelage à un point (50), par rapport aux angles (40, 42, 44) d'un châssis d'attelage (10) du type trois points, est agencé dans une zone centrale du triangle.

7. Dispositif selon l'une quelconque des revendications 1 à 6, **caractérisé en ce que** les éléments d'assemblage (18, 20, 22, 24, 26, 28) sont agencés à la manière d'un hexapode.

8. Dispositif selon l'une quelconque des revendications 1 à 7, **caractérisé en ce qu'**au moins un élément d'assemblage (18, 20, 22, 24, 26, 28) comporte un vérin hydraulique pour le réglage en longueur.

9. Dispositif selon l'une quelconque des revendications 1 à 8, **caractérisé en ce que** sur le châssis d'attelage (10) sont agencés des crochets d'attache (52, 54, 56) qui sont utilisés pour la fixation en trois points d'une machine annexe.

10. Dispositif selon l'une quelconque des revendications 1 à 9, **caractérisé en ce que** l'attelage en un point (50) comporte un dispositif de remorquage, en particulier une mâchoire de traction ou un attelage à boule.

11. Dispositif selon l'une quelconque des revendications 1 à 10, **caractérisé en ce que** l'attelage en un point (50) est un attelage de remorque automatique.
